# EUROPÄISCHE PATENTANMELDUNG

(11) **EP 4 354 712 A1**
(43) Veröffentlichungstag der Anmeldung: **17.04.2024**
(21) Anmeldenummer: 22201623.0
(22) Anmeldetag: 14.10.2022
(51) Int. Cl.: H02K 15/00, H02K 5/22, H02K 3/47

(54) **VERFAHREN ZUR ELEKTRISCHEN KONTAKTIERUNG EINER LITZENDRAHTWICKLUNG AN EINER TRÄGERPLATTE SOWIE LITZENDRAHTWICKLUNG**

(71) Anmelder: maxon international ag, 6072 Sachseln (CH)
(72) Erfinder: Durrer, Robin, 6003 Luzern (CH); Hage, Bernd, 6060 Sarnen (CH); Schelling, Remo, 6078 Lungern (CH)
(74) Vertreter: Grünecker Patent- und Rechtsanwälte PartG mbB

(57) **Zusammenfassung**

Die Erfindung betrifft ein Verfahren zur Kontaktierung einer Wicklung mit einer Trägerplatte, wobei die Wicklung ein erstes axiales Ende und ein gegenüberliegendes zweites axiales Ende aufweist, und wobei die Wicklung zumindest zwei Litzendrahtenden umfasst zur elektrischen Verbindung mit der Trägerplatte und wobei die Litzendrahtenden Einzeldrähte aufweisen und über ein axiales Ende der Wicklung hinausstehen, im Wesentlichen parallel zur Achse der Wicklung ausgerichtet sind und zumindest über einen Teilumfang der Wicklung verteilt sind, und wobei die Trägerplatte eine den Litzendrahtenden zugewandte erste Stirnseite und eine den Litzendrahtenden abgewandte zweite Stirnseite sowie eine Mantelfläche aufweist, und wobei die erste Stirnseite Ausnehmungen zur Aufnahme der Litzendrahtenden aufweist, umfassend folgende Verfahrensschritte:
- Zusammenführen des Litzendrahtendes und einer Hülse, sodass die Hülse das Litzendrahtende über zumindest einen Teil seines Längenbereichs zumindest abschnittsweise umgibt,
- Elektrisches Kontaktieren des Litzendrahtendes mit der Hülse,
- Einführen des mit der Hülse bestückten Litzendrahtendes in die Ausnehmung der Trägerplatte, wobei erfindungsgemäß vorgesehen ist, dass die Wicklung eine Litzendrahtwicklung ist und die Litzendrahtenden Einzeldrähte aufweisen und wobei nach dem Einführen des mit der Hülse bestückten Litzendrahtendes in die Ausnehmung der Trägerplatte die Litzendrahtenden im Wesentlichen parallel zur Achse der Wicklung ausgerichtet bleiben und die Hülse und die Trägerplatte miteinander elektrisch kontaktiert werden.

## Beschreibung

Die vorliegende Erfindung betrifft ein Verfahren zur Kontaktierung einer Wicklung an einer Trägerplatte nach dem Oberbegriff des unabhängigen Anspruchs 1 sowie eine für das Verfahren geeignete Litzendrahtwicklung gemäß dem unabhängigen Anspruch 12.

Ein gattungsgemäßes Verfahren findet bei der Herstellung von elektrischen Motoren und insbesondere bei der Herstellung elektrischer Kleinmotoren Anwendung.

Um die Litzen eines Wicklungsdrahts zu bündeln, ist es bekannt, das Ende des Wicklungsdrahts offen in ein Lötbad zu halten und somit zu verzinnen. Je nach Ausführung des Isolationslacks besteht dabei jedoch die Gefahr, dass dieser nicht vollständig weggeschmolzen wird und keine optimale Bündelung der Litzen erfolgt, wodurch die elektrische Kontaktierung weiter erschwert wird. Insbesondere Isolationslack für sterilisierbare Wicklungen ist sehr hitzebeständig und damit anfällig für eine fehlerhafte Kontaktierung mittels Lötbad.

Zur Sicherstellung einer guten und sicheren Verbindung zur Trägerplatte werden die Litzen daher in Hülsen eingefügt und im Anschluss die Hülse mit der Trägerplatte elektrisch kontaktiert.

Da bei elektrischen Kleinmotoren, insbesondere bei elektrischen Kleinmotoren mit einem Durchmesser kleiner als 100 mm und vor allem bei elektrischen Kleinmotoren mit einem Durchmesser kleiner als 60 mm der Bauraum in radialer Richtung sehr begrenzt ist, sollten die Enden des Litzendrahts mitsamt der Hülse vorteilhafterweise ihre axiale Ausrichtung relativ zur Wicklung beibehalten.

Ein Verfahren zur Kontaktierung einer Wicklung mit einer Trägerplatte nach dem Oberbegriff des Anspruchs 1 ist aus DE102017206187 bekannt. Dieses Dokument zeigt die Kontaktierung einer Wicklung an eine Trägerplatte, indem die Enden der Wicklung in an der Trägerplatte angebrachte Crimp-Anschlüsse eingeführt und mit diesen vercrimpt werden. Anschließend werden die Crimp-Anschlüsse mitsamt den Wicklungsenden in Ausnehmungen verformt, sodass die Enden der Wicklungsdrähte nicht mehr in axialer Richtung zur Wicklung ausgerichtet sind, sondern radial nach innen oder radial nach außen gebogen werden und im Wesentlichen parallel zur Oberfläche der Trägerplatte positioniert sind.

Ein derartiges Verfahren beansprucht jedoch viel Bauraum in radialer Richtung und ist für Litzendrahtwicklungen nicht geeignet, da durch das Umbiegen der Drahtenden die Gefahr besteht, dass einzelne Drähte des Litzendrahts brechen.

Ein weiteres aus dem Stand der Technik bekanntes Dokument ist US2011012468. Es zeigt einen Radialspaltmotor mit einer hohlzylindrischen Wicklung. Die Wicklung ist über ihre Wicklungsenden, die aus einem oder mehreren Drähten bestehen können, mit einer Trägerplatte kontaktiert, wobei die Wicklungsenden dazu in Durchgangslöcher in einer Trägerplatte eingeführt sind. Ein Vercrimpen der Wicklungsenden ist indes nicht beschrieben, auch nicht, wie genau die Kontaktierung der Wicklungsenden mit der Trägerplatte erfolgt.

Insbesondere bei elektrischen Kleinmotoren steht für die Kontaktierung der Wicklung mit der Trägerplatte nur ein sehr begrenzter Bauraum zur Verfügung. Umso komplexer gestaltet sich dabei die sichere Kontaktierung von Wicklungsenden, die aus einer Vielzahl von Einzeldrähten bestehen.

Die vorliegende Erfindung hat sich daher zur Aufgabe gemacht, ein einfaches Verfahren zur kompakten und sicheren Kontaktierung einer Litzendrahtwicklung mit einer Trägerplatte und eine nach diesem Verfahren hergestellte Litzendrahtwicklung bereitzustellen.

Die Aufgabe wird gelöst durch die Merkmale der unabhängigen Ansprüche 1 und 12. Demnach liegt bei einem Verfahren gemäß dem Oberbegriff des unabhängigen Anspruchs 1 dann eine erfindungsgemäße Lösung der Aufgabe vor, wenn die Wicklung eine Litzendrahtwicklung ist und die Litzendrahtenden Einzeldrähte aufweisen und wobei nach dem Einführen des mit der Hülse bestückten Litzendrahtendes in die Ausnehmung der Trägerplatte die Litzendrahtenden im Wesentlichen parallel zur Achse der Wicklung ausgerichtet bleiben und die Hülse und die Trägerplatte miteinander elektrisch kontaktiert werden.

Erfindungsgemäß sind die Litzendrahtenden sowohl vor als auch nach dem Einführen der Hülsen in die Ausnehmungen im Wesentlichen parallel zur Achse der Litzendrahtwicklung ausgerichtet. Im Wesentlichen parallel bedeutet, dass die Abweichung der Winkel der Ausrichtung der einzelnen Litzendrahtenden zur Achse der Litzendrahtwicklung maximal 15°, vorzugsweise maximal 10° und besonders bevorzugt maximal 5° beträgt. Das hat den Vorteil, dass in radialer Richtung kaum Bauraum beansprucht wird und die Litzendrahtenden keiner starken Biegung ausgesetzt werden.

Vorteilhafte Ausgestaltungen der Erfindung sind Gegenstand der Unteransprüche.

Vorzugsweise ist die Litzendrahtwicklung hohlzylindrisch ausgeführt. Das erfindungsgemäße Verfahren lässt sich jedoch auch auf Litzendrahtwicklungen anderer dem Fachmann bekannter Ausführungsformen anwenden.

Gemäß einer vorteilhaften Ausführungsform des vorliegenden Verfahrens ist die Hülse als geschlossene Hülse ausgeführt und zum Zusammenführen der Hülse und des Litzendrahtendes wird die Hülse derart über das Litzendrahtende geschoben, dass das Litzendrahtende über zumindest einen Teil seines Längenbereichs von der Hülse vollständig radial umschlossen wird. Die Hülse kann dabei vollständig auf das Litzendrahtende aufgeschoben werden, sodass die Spitze des Litzendrahtendes über die Hülse hinausragt. Denkbar ist jedoch auch, dass die Hülse nur teilweise auf das Litzendrahtende aufgeschoben wird, sodass die Spitze des Litzendrahtendes innerhalb der Hülse liegt. Vorzugsweise wird die Hülse zumindest bis zu ihrer halben Länge auf das Litzendrahtende aufgeschoben, weiter vorzugsweise zumindest bis zu Dreiviertel ihrer Länge.

Gemäß einer weiteren vorteilhaften Ausführungsform des vorliegenden Verfahrens ist die Hülse beim Zusammenführen mit dem Litzendrahtende als Hülsenrohling ausgeführt, der durch Umformen in die Form einer Hülse gebracht wird und so das Litzendrahtende über zumindest einen Teil des Längenbereichs vollständig radial umschlossen wird. Der Hülsenrohling ist vorzugsweise als Blechstreifen ausgeführt, wobei der Blechstreifen eine Breite und eine Länge aufweist und wobei die Länge des Blechstreifens zumindest das Doppelte der Breite des Blechstreifens beträgt und vorzugsweise die Länge zumindest das Dreifache der Breite beträgt. Der Blechstreifen wird derart seiner Länge nach orthogonal zur Ausrichtung des Litzendrahtendes positioniert, dass sich der Blechstreifen und das Litzendrahtende berühren. Anschließend wird der Blechstreifen so oft nach innen, also zum Litzendrahtende hin, gebogen, bis der Blechstreifen das Litzendrahtende vollständig oder annähernd vollständig umschließt. Vorteilhafterweise wird der Blechstreifen dreimal derart gebogen, dass das Litzendrahtende vollständig umschlossen wird. Denkbar ist auch, dass der Blechstreifen ein viertes Mal gebogen wird, sodass sich zwei der durch das Biegen entstanden Flächen des Blechstreifens überlappen. Durch anschließendes elektrisches Kontaktieren wird eine sichere elektrische Verbindung zwischen dem gebogenen Blechstreifen und dem Litzendrahtende hergestellt. Dies kann durch Verlöten, Vercrimpen oder andere dem Fachmann bekannte Maßnahmen geschehen. Der Vorteil gegenüber einer geschlossenen Hülse und einer geschlitzten Hülse liegt darin, dass der Hülsenrohling nicht über die empfindlichen Spitzen der Einzeldrähte des Litzendrahtendes geführt werden muss und somit die Gefahr eines Verbiegens oder Brechens und infolgedessen einer unsauberen Kontaktierung erheblich minimiert wird.

Gemäß einer besonders vorteilhaften Ausführungsform des vorliegenden Verfahrens wird die Hülse durch Crimpen und vorzugsweise durch Heißcrimpen mit den am Innenumfang anliegenden Einzeldrähten des Litzendrahtendes kontaktiert. Die Einzeldrähte des Litzendrahtendes sind bevorzugt mittels Isolierlack isoliert. Durch das Crimpwerkzeug wird die Hülse derart gequetscht, dass das Kupfer der Einzeldrähte mit der gecrimpten Hülse elektrisch verbunden wird. Der Vorteil des Heißcrimpens besteht darin, dass durch Erwärmung des von der Hülse umschlossenen Bereichs des Litzendrahtendes der Isolierlack der Einzeldrähte des Litzendrahtendes weggeschmolzen wird. Die Erwärmung erfolgt auf zumindest 200 °C und vorzugsweise auf zumindest 250 °C. Bei diesen Temperaturen wird der Isolierlack, der die Einzeldrähte umschließt, weggeschmolzen. Abhängig vom Isolierlacktyp werden höhere Temperaturen benötigt. Isolierlack, der für sterilisierbare Teile geeignet ist, benötigt dabei eher höhere Temperaturen, um vollständig wegzuschmelzen und dadurch eine gute Kontaktierung zwischen den Einzeldrähten des Litzendrahtendes und der Hülse zu ermöglichen. Vorzugsweise erfolgt die Erwärmung durch das Anlegen eines elektrischen Stroms mit einer Stromstärke von 100 A bis 200 A und vorzugsweise mit einer Stromstärke von 140 A bis 160 A. Ein Vorteil von Heißcrimpverbindungen ist neben der guten elektrischen Kontaktierung ihre Robustheit gegenüber Vibrationen.

Gemäß einer besonders bevorzugten Ausführungsform des vorliegenden Verfahrens weist die Hülse eine erste Breite und eine zweite Breite auf, wobei die erste und die zweite Breite orthogonal zur Längsachse des Litzendrahtendes ausgerichtet sind. Die erste und zweite Breite können in einem rechten Winkel zueinander ausgerichtet sein. Nach dem elektrischen Kontaktieren weist die erste Breite der Hülse eine um ein Zweifaches größere räumliche Ausdehnung auf als die zweite Breite. Vorzugsweise ist die erste Breite um ein Vierfaches breiter als die zweite Breite. Die Hülse weist folglich nach dem Crimpen eine abgeflachte Form auf.

Gemäß einer weiteren bevorzugten Ausführungsform des vorliegenden Verfahrens wird zur Kontaktierung das Litzendrahtende mit der Hülse so lange in ein Zinnbad getaucht, bis die Isolation der Einzeldrähte des Litzendrahtendes aufgeschmolzen ist. Die Dauer zum Aufschmelzen der Isolation kann zwischen 2 bis 8 Sekunden, vorzugsweise 5 Sekunden betragen. Die Dauer zum Aufschmelzen der Isolation ist dabei abhängig von der Art der verwendeten Isolation. Insbesondere Isolationslack für sterilisierbare Wicklungen ist sehr hitzebeständig, woraus sich eine längere Dauer zum Aufschmelzen ergibt.

Gemäß einer besonders bevorzugten Ausführungsform des vorliegenden Verfahrens weist die Ausnehmung einer ersten Stirnseite der Trägerplatte eine Tiefe auf, die sich von der ersten Stirnseite aus orthogonal in Richtung einer zweiten Stirnseite erstreckt und weist die Ausnehmung eine erste Breite und eine zweite Breite auf, wobei die erste Breite und die zweite Breite in einem rechten Winkel zueinander ausgerichtet sind und wobei die Hülse mit dem Litzendrahtende derart kontaktiert wird, dass zumindest eine Breite der Hülse mit zumindest einer Breite der Ausnehmung der ersten Stirnseite derart zusammenführbar ist, dass ein Spiel von zumindest 0,1 mm, vorzugsweise von zumindest 1 mm und weiter vorzugsweise von zumindest 2 mm besteht. Die Differenz zwischen der ersten Breite der Hülse und der ersten Breite der Ausnehmung beträgt somit mindestens 0,1 mm, vorzugsweise mindestens 1 mm und weiter bevorzugt mindestens 2 mm. Ferner beträgt die Differenz zwischen der zweiten Breite der Hülse und der zweiten Breite der Ausnehmung mindestens 0,1 mm, vorzugsweise mindestens 1 mm und weiter bevorzugt mindestens 2 mm.

Vorzugsweise sind Hülse und Ausnehmung derart aufeinander abgestimmt, dass sich die Hülse ohne Verklemmen in die Ausnehmung einführen lasst und dabei nicht mehr Spiel zugelassen wird, als für eine möglichst leichte Montage nötig ist. Durch die Beabstandung kann auch Lötzinn von einer Stirnseite durch die Ausnehmung zu der gegenüberliegenden Stirnseite der Leiterplatte fließen und ermöglicht damit eine gute elektrische Kontaktierung zwischen der Hülse und der Trägerplatte.

Die Litzendrahtwicklung und die Trägerplatte werden zum Einführen der Hülsen in die Ausnehmung koaxial zueinander ausgerichtet. Durch Rotation um die gemeinsame Achse werden Litzendrahtwicklung und Trägerplatte derart zueinander ausgerichtet, dass die Hülse durch axiales Verschieben der Litzendrahtwicklung und/oder der Leiterplatte in die Ausnehmung eingeführt werden kann.

Vorzugsweise verjüngen sich die Profile der Ausnehmung und/oder der Hülse, die durch die jeweilige erste und zweite Breite der Hülse und der Ausnehmung definiert werden, sodass die Montage durch diese Art Führung weiter erleichtert wird.

Gemäß einer besonders bevorzugten Ausführungsform des vorliegenden Verfahrens sind die Ausnehmungen an der ersten Stirnseite der Trägerplatte durchgehend zur zweiten Stirnseite und zur Mantelfläche hin offen ausgeführt, wobei die Trägerplatte und die Litzendrahtwicklung derart zueinander ausgerichtet werden, dass die Achse der Litzendrahtwicklung und die Längsachse der Trägerplatte, welche orthogonal zur ersten Stirnseite der Trägerplatte verläuft, parallel zueinander verlaufen und wobei Trägerplatte und Litzendrahtwicklung in axialer Richtung derart passend zueinander ausgerichtet werden, dass die Hülse durch eine Bewegung radial nach innen in die Ausnehmung gesteckt werden kann. Alternativ ist denkbar, dass zum Einführen der Hülse die Litzendrahtwicklung als Ganze in Richtung der Ausnehmung bewegt wird. Denkbar ist auch, dass die Trägerplatte samt Ausnehmung in Richtung Hülse bewegt wird oder dass Hülse und Ausnehmung aufeinander zubewegt werden und die Hülse dadurch in die Ausnehmung eingeführt wird.

Gemäß einer besonders bevorzugten Ausführungsform des vorliegenden Verfahrens sind die Ausnehmungen als Langlöcher ausgeführt, die zur Mantelfläche der Trägerplatte hin geöffnet sind, wobei die Ausrichtung der Längsachse der Langlöcher in radialer Richtung zum Kreismittelpunkt der Stirnseite einen Winkel aufweist, wobei dieser Winkel 30°-60° und vorzugsweise 40°-50° beträgt und wobei die Hülse in die Langlöcher der Trägerplatte durch radiales Verschieben eingeführt wird und die Verschiebung von einer zusätzlichen rotatorischen Bewegung der Trägerplatte um den Mittelpunkt der Stirnseite überlagert wird. Vorteilhafterweise sind für diese Ausführungsform des erfindungsgemäßen Verfahrens die Hülsen entsprechend der Lage der Langlöcher ausgerichtet. Die Breiten der Hülse und der Ausnehmung sind dazu nicht nur der Größe nach aufeinander abgestimmt, sondern auch in ihrer Ausrichtung. Die erste Breite der Hülse kann sich dafür in Richtung der Längsachse des Langlochs erstrecken.

Die Hülse wird im Anschluss an das Einführen in die Ausnehmung der Trägerplatte mit der Trägerplatte elektrisch kontaktiert. Bei der elektrischen Kontaktierung wird durch Verlöten, Vercrimpen oder eine andere dem Fachmann bekannte Maßnahme ein sicherer elektrischer Kontakt zwischen diesen beiden Bauteilen hergestellt. Gemäß einer bevorzugten Ausführungsform der vorliegenden Erfindung wird die Hülse mittels Verlöten mit der Trägerplatte elektrisch kontaktiert.

Besonders bevorzugt stellt die Erfindung eine Litzendrahtwicklung bereit, die vorzugsweise nach einer der beschriebenen Ausführungsformen des beanspruchten Verfahrens hergestellt wird.

Gemäß einer besonders bevorzugten Ausführungsform der erfindungsgemäßen Litzendrahtwicklung umfasst ein Litzendrahtende zumindest fünf Einzeldrähte und vorzugsweise zumindest fünfzehn Einzeldrähte.

Gemäß einer weiteren bevorzugten Ausführungsform der erfindungsgemäßen Litzendrahtwicklung umfasst die Isolation der Einzeldrähte der Litzendrahtwicklung einen sterilisierbaren Lack. Sterilisierbarer Lack zeichnet sich durch seine Hitzebeständigkeit aus, weswegen zur Kontaktierung der Litzendrahtenden mit der Hülse vorzugsweise heißgecrimpt wird. Alternativ kann die Kontaktierung der Hülse mit dem Litzendrahtende auch mittels eines Zinnbads erreicht werden. Die Zeit, in der die Hülse mitsamt dem Litzendrahtende dem Zinnbad ausgesetzt ist, muss gegenüber der Verwendung eines nichtsterilisierbaren Lacks entsprechend verlängert werden.

Gemäß einer weiteren bevorzugten Ausführungsform der erfindungsgemäßen Litzendrahtwicklung sind die Litzendrahtenden über einen Umfangsabschnitt von höchstens 180° und vorzugsweise über einen Umfangsabschnitt von höchstens 150° der Litzendrahtwicklung angeordnet. Die Ausnehmungen der ersten Stirnseite der Trägerplatte sind entsprechend auch über einen Umfangsabschnitt von höchstens 180° und vorzugsweise über nicht mehr als 150° verteilt und so angeordnet, dass sie bei koaxialer Ausrichtung von Litzendrahtwicklung und Trägerplatte durch eine Rotation von Litzendrahtwicklung oder Trägerplatte derart positioniert werden können, dass die Litzendrahtenden durch eine Bewegung in axialer Richtung der Litzendrahtwicklung oder der Trägerplatte in die Ausnehmungen geführt werden können.

Nachfolgend wird anhand der Figuren das erfindungsgemäße Verfahren erläutert.

Es zeigen:
Figur 1: eine schematische Darstellung einer erfindungsgemäßen Litzendrahtwicklung und einer Trägerplatte
Figur 2: eine schematische Darstellung des Litzendrahtendes gemäß Figur 1
Figur 3a: eine schematische Darstellung eines Litzendrahtendes mit einer geschlossenen Hülse
Figur 3b: eine schematische Darstellung eines Litzendrahtendes mit einer geschlossenen Hülse
Figur 4: eine schematische Darstellung der Positionierung eines Hülsenrohlings zum Litzendrahtende
Figur 5: eine schematische Darstellung der Ausrichtung der Litzendrahtenden
Figur 6: eine schematische Darstellung alternativer Ausführungsformen der Trägerplatte
Figur 7: eine schematische Darstellung der Litzendrahtwicklung und der Trägerplatte nach der Durchführung des erfindungsgemäßen Verfahrens

Für die folgenden Ausführungsformen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen verwiesen.

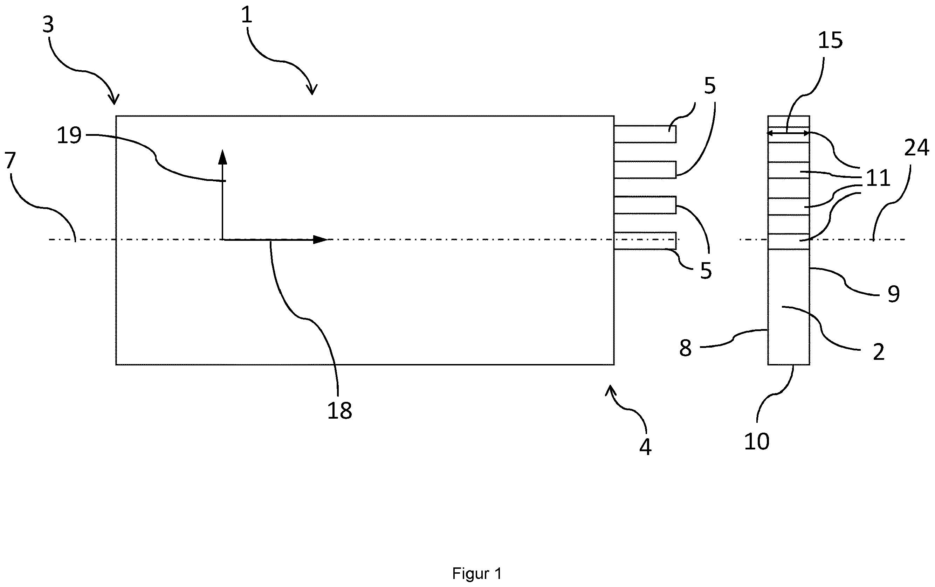

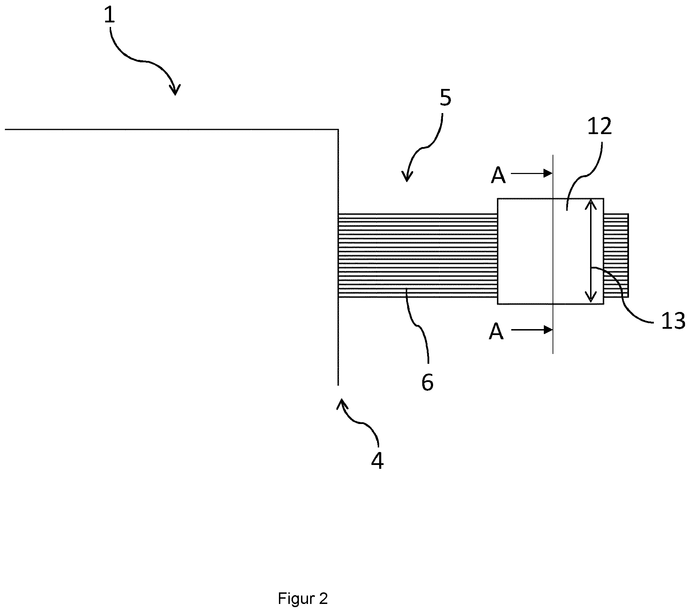

Figur 1 zeigt schematisch eine erste Ausführungsform einer Litzendrahtwicklung 1 mit vier Litzendrahtenden 5. Die Litzendrahtwicklung 1 weist eine hohlzylindrische Form auf mit einem ersten axialen Ende 3, einem zweiten axialen Ende 4, das dem ersten axialen Ende 3 gegenüberliegt, und einer Achse 7. In Bezug auf die Litzendrahtwicklung 1 ist eine axiale Richtung 18 und eine radiale Richtung 19 definiert. Die Litzendrahtenden 5 umfassen, wie in Figur 2 dargestellt, eine Vielzahl von Einzeldrähten 6, sind parallel zur Achse 7 der Litzendrahtwicklung 1 ausgerichtet und stehen über das zweite axiale Ende 4 hinaus. Zudem sind die Litzendrahtenden 5 über einen Teilumfang der Litzendrahtwicklung 1 verteilt, in dieser ersten Ausführungsform in etwa über ein Viertel des Umfangs der Litzendrahtwicklung 1. Figur 1 zeigt weiter eine Trägerplatte 2 mit einer der Litzendrahtwicklung 1 zugewandten ersten Stirnseite 8, einer zweiten Stirnseite 9 und einer Mantelfläche 10. Die Trägerplatte 2 ist kreisförmig ausgeführt und weist eine Längsachse 24 auf. Die vier Ausnehmungen 11 der ersten Stirnseite 8 weisen eine Tiefe 15 auf und sind durchgängig bis zur zweiten Stirnseite 9 ausgeführt. Die Litzendrahtwicklung 1 und die Trägerplatte 2 sind koaxial zueinander ausgerichtet und wie in Figur 1 gut zu erkennen ist, sind auch die Litzendrahtenden 5 und die Ausnehmungen 11 axial fluchtend zueinander ausgerichtet.

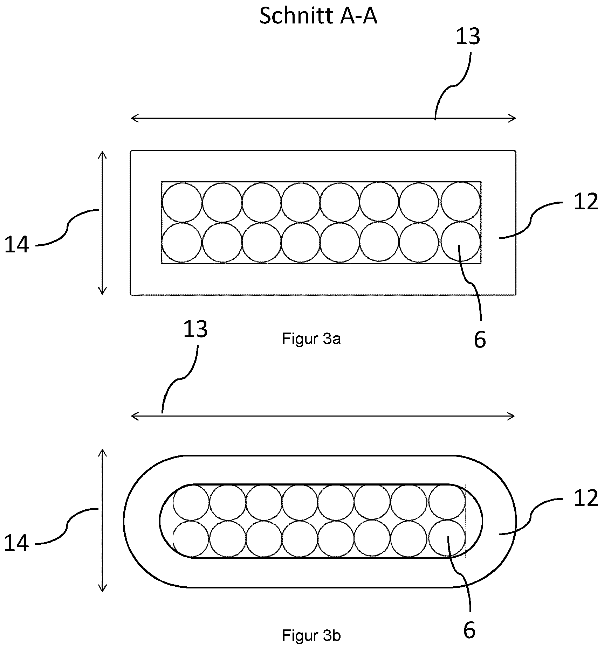

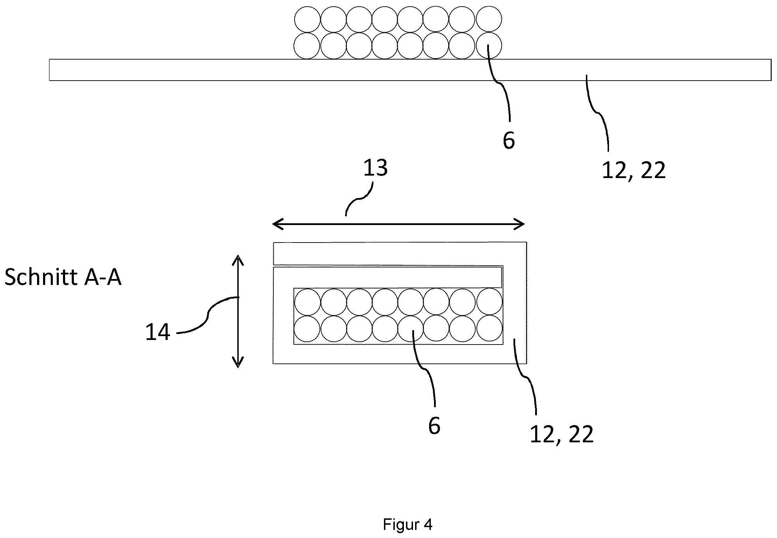

Wie in Figur 2 gezeigt ist, umfasst ein Litzendrahtende 5 eine Vielzahl an Einzeldrähten 6. Vorzugsweise umfasst ein Litzendrahtende 5 zumindest fünfzehn Einzeldrähte 6. Das Litzendrahtende 5 ist mit einer Hülse 12 kontaktiert, wobei die Hülse 12 einen Teil des Litzendrahtendes 5 vollständig umgibt. Die Hülse 12, die eine erste Breite 13 aufweist, kann als geschlossene Hülse 12 ausgeführt sein, siehe Figur 3, wobei die Hülse 12 dann auf das Litzendrahtende 5 aufgeschoben wird. Alternativ kann die Hülse 12 vor dem Kontaktieren als Hülsenrohling 22 ausgeführt sein, siehe Abbildung 4. Das Litzendrahtende 5 steht im gezeigten Ausführungsbeispiel über die Hülse 12 hinaus. Denkbar ist jedoch auch, dass die Verbindung von Litzendrahtende 5 und Hülse 12 so ausgeführt ist, dass das die Spitzen des Litzendrahtendes 5 innerhalb der Hülse 12 enden.

Die Figuren 3a und 3b zeigen den Schnitt A-A aus Figur 2 durch die Hülse 12. Die Hülse 12 ist dabei als geschlossene Hülse ausgeführt und umgibt mehrere Einzeldrähte 6. Die Hülse 12 und das Litzendrahtende 5 sind miteinander kontaktiert und die Hülse 12 weist eine erste Breite 13 und eine zweite Breite 14 auf, die orthogonal zur Achse 7 der hohlzylindrischen Wicklung und in einem rechten Winkel zueinander ausgerichtet sind, wobei die erste Breite 13 in etwa der dreifachen Länge der zweiten Breite 14 entspricht. Es ist gut zu erkennen, dass die Hülse eine abgeflachte Form aufweist. In Figur 3a verlaufen die Außenkanten der ersten Breite 13 und der zweiten Breite 14 gerade. Die Außenkanten können dabei wie in der Figur 3a gezeigt in einem rechten Winkel zueinander stehen. Insbesondere die Außenkanten der zweiten Breite können auch wie in Figur 3b gezeigt in einem Halbkreis verlaufen.

Figur 4 zeigt in der unteren Abbildung den Schnitt A-A in einer alternativen Ausführungsform. Die Hülse 12 ist hier vor dem Kontaktieren als Hülsenrohling 22 ausgeführt. Wie die obere Abbildung der Figur 4 zeigt, kann der Hülsenrohling 22 beispielsweise als Blechstreifen ausgeführt sein. Der Blechstreifen wird seiner Länge nach orthogonal zum Litzendrahtende 5 ausgerichtet und so an das Litzendrahtende 5 herangeführt, dass sich Litzendrahtende 5 und Blechstreifen berühren. Anschließend wird der Blechstreifen so oft nach innen, also zum Litzendrahtende 5 hin, gebogen, bis der Blechstreifen das Litzendrahtende 5 vollständig oder annähernd vollständig umschließt. Ein mögliches Ergebnis dieses Biegevorgangs zeigt die untere Abbildung von Figur 4. Der Blechstreifen wird viermal gebogen, sodass sich zwei der durch das Umbiegen entstandenen Flächen des Blechstreifens überlappen. Denkbar ist auch ein vierfaches Umbiegen, wobei sich die beiden überlappenden Flächen nur teilweise überlappen. Alternativ kann auch ein 3-maliges Umbiegen ausreichend sein, wobei dann auf ein Überlappen verzichtet wird. Durch anschließendes Kontaktieren wird eine sichere elektrische Verbindung zwischen dem gebogenen Blechstreifen und dem Litzendrahtende 5 hergestellt. Der Vorteil gegenüber einer geschlossenen Hülse 12 und einer geschlitzten Hülse liegt darin, dass der Hülsenrohling 22 nicht über die empfindlichen Spitzen der Einzeldrähte 6 des Litzendrahtendes 5 geführt werden muss und somit die Bruchgefahr und infolgedessen eine unsaubere Kontaktierung erheblich minimiert wird. Das Kontaktieren der Hülse 12 mit dem Litzendrahtende 5 erfolgt vorzugsweise durch Vercrimpen. Alternativ kann zum Kontaktieren die Hülse 12 mitsamt dem Litzendrahtende 5 in ein Zinnbad getaucht werden.

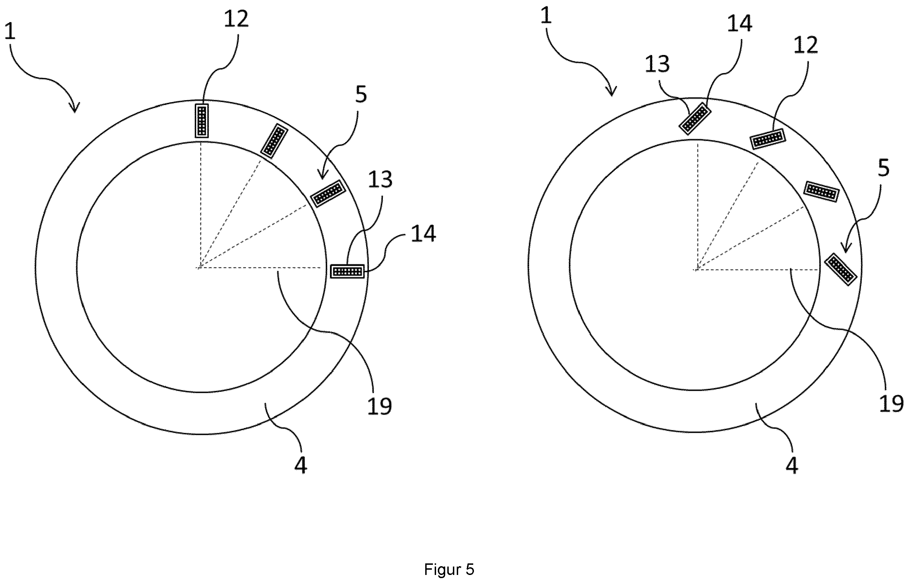

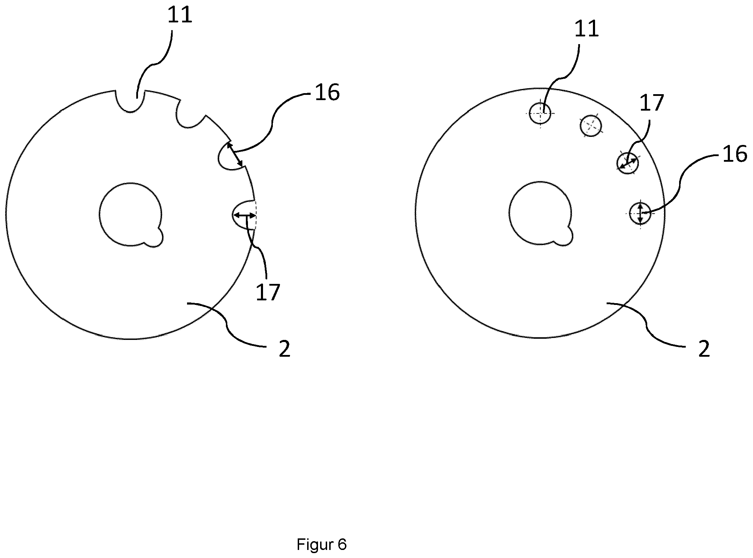

Figur 5 zeigt zwei alternative Ausführungsformen der erfindungsgemäßen Litzendrahtwicklung 1. Es ist gut zu erkennen, dass die Litzendrahtenden 5 über in etwa ein Viertel des Umfangs der Litzendrahtwicklung 1 verteilt angeordnet sind. Wie die beiden Abbildungen aus Figur 5 zeigen, kann dabei die Ausrichtung der Litzendrahtenden 5 variieren. Die Ausrichtung wird im Wesentlichen definiert durch die Ausrichtung der ersten und zweiten Breite 13, 14 der Hülse 12 relativ zu der jeweiligen radialen Richtung 19 der Litzendrahtwicklung 1. Ausrichtung und Anordnung der Litzendrahtenden 5 und der Hülse 12 sind vorzugsweise auf die Anordnung und Ausrichtung der Ausnehmungen 11 der Trägerplatte 2, siehe Figur 6, abgestimmt.

Figur 6 zeigt zwei bevorzugte Ausführungsformen der Trägerplatte 2 für das erfindungsgemäße Verfahren. Die rechte Abbildung der Figur 6 zeigt Ausnehmungen 11, die als Durchgangsbohrung ausgeführt sind. In einer besonders bevorzugten Ausführungsform der Trägerplatte 2 sind die Ausnehmungen 11 zur Mantelfläche 10 hin offen ausgeführt, wie die linke Darstellung von Figur 6 zeigt. Vorzugsweise sind die Kanten der Ausnehmungen 11 zur Mantelfläche 10 hin abgerundet, um das Einstecken der Hülsen 12 in die Ausnehmungen 11 bei der Montage zu erleichtern. Unabhängig von der Ausführung der Ausnehmungen 11 weisen die Ausnehmungen 11 eine erste Breite 16 und eine zweite Breite 17 auf.

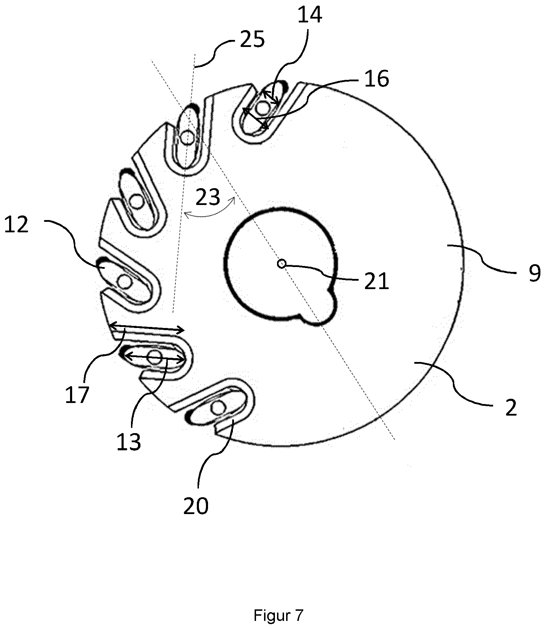

Figur 7 zeigt die Trägerplatte 2 nach dem Einführen der Hülse 12 in die Ausnehmungen 11. Besonders bevorzugt sind die Ausnehmungen 11 als Langlöcher 20 ausgeführt, die zur Mantelfläche 10 der Trägerplatte 2 hin geöffnet sind, wobei die Ausrichtung der Längsachse 25 der Langlöcher 20 in radialer Richtung zum Kreismittelpunkt 21 der zweiten Stirnseite 9 einen Winkel 23 aufweist, wobei dieser Winkel 30°-60° und vorzugsweise 40°-50° beträgt. Vorteilhafterweise sind für das erfindungsgemäße Verfahren die Hülsen 12 entsprechend der Lage der Langlöcher 20 ausgerichtet. Die zweite Breite 14 der Hülsen 12 und die erste Breite 16 der Ausnehmungen 11 sind dazu nicht nur der Größe nach aufeinander abgestimmt, sondern auch in ihrer Ausrichtung. Die erste Breite 13 der Hülse 12 erstreckt sich dafür in Richtung der Längsachse 25 des Langlochs 20, wobei auch die erste Breite 13 der Hülse 12 und die zweite Breite 17 des Langlochs 20 derart aufeinander abgestimmt sind, dass die Hülse 12 nahezu vollständig in das Langloch eingesteckt werden kann.

Gemäß einer besonders vorteilhaften Ausführungsform des erfindungsgemäßen Verfahrens werden die Hülsen 12 und die Langlöcher 20 in axialer Richtung 18 der Litzendrahtwicklung auf gleicher Höhe und aneinander angrenzend positioniert und die Litzendrahtwicklung 1 und die Trägerplatte 2 koaxial zueinander ausgerichtet. Dabei werden die Litzendrahtenden 5 leicht radial nach außen gebogen. Vorteilhafterweise sind die Litzendrahtenden 5 ausreichend lang ausgeführt, sodass eine leichte Biegung der Litzendrahtenden 5 nicht zu einem Bruch von Einzeldrähten 6 oder gar zum Bruch des Litzendrahtendes 5 führt. Anschließend werden die Hülsen 12 radial nach innen bewegt und dadurch in die Langlöcher 20 eingesteckt. Vorzugsweise erfolgt dabei gleichzeitig eine Rotationsbewegung der Trägerplatte 2 relativ zur Litzendrahtwicklung 1. Das hat den Vorteil, dass bei der Montage das Einstecken der Hülsen 12 in die Langlöcher 20 vereinfacht wird. Von Vorteil ist, wenn die Seitenflächen der Hülsen 12 abgerundet sind.

Gemäß einer weiteren bevorzugten Ausführungsform des vorliegenden Verfahrens wird die Hülse 12 im Anschluss an das Einführen in die Ausnehmung 11 der Trägerplatte 2 zum Kontaktieren mit der Trägerplatte 2 verlötet. Verlöten bietet den Vorteil einer äußerst robusten elektrischen Kontaktierung und macht weitere Klemmmechanismen überflüssig.

### Bezugszeichenliste:

- 1: Wicklung/Litzendrahtwicklung
- 2: Trägerplatte
- 3: erstes axiales Ende
- 4: zweites axiales Ende
- 5: Litzendrahtende
- 6: Einzeldraht
- 7: Achse der Wicklung
- 8: erste Stirnseite
- 9: zweite Stirnseite
- 10: Mantelfläche
- 11: Ausnehmungen
- 12: Hülse
- 13: erste Breite der Hülse
- 14: zweite Breite der Hülse
- 15: Tiefe der Ausnehmung
- 16: erste Breite der Ausnehmung
- 17: zweite Breite der Ausnehmung
- 18: axiale Richtung der Litzendrahtwicklung
- 19: radiale Richtung der Litzendrahtwicklung
- 20: Langloch
- 21: Mittelpunkt der kreisförmigen Stirnseite
- 22: Hülsenrohling
- 23: Winkel
- 24: Längsachse der Trägerplatte
- 25: Längsachse des Langlochs

## Patentansprüche

1. Verfahren zur Kontaktierung einer Wicklung (1) mit einer Trägerplatte (2), wobei die Wicklung (1) ein erstes axiales Ende (3) und ein gegenüberliegendes zweites axiales Ende (4) aufweist, und wobei die Wicklung (1) zumindest zwei Litzendrahtenden (5) umfasst zur elektrischen Verbindung mit der Trägerplatte (2) und wobei die Litzendrahtenden (5) über ein axiales Ende (3), (4) der Wicklung (1) hinausstehen, im Wesentlichen parallel zur Achse (7) der Wicklung (1) ausgerichtet sind und zumindest über einen Teilumfang der Wicklung (1) verteilt sind, und wobei die Trägerplatte (2) eine den Litzendrahtenden (5) zugewandte erste Stirnseite (8) und eine den Litzendrahtenden (5) abgewandte zweite Stirnseite (9) sowie eine Mantelfläche (10) aufweist, und wobei die erste Stirnseite (8) Ausnehmungen (11) zur Aufnahme der Litzendrahtenden (5) aufweist, umfassend folgende Verfahrensschritte:
- Zusammenführen des Litzendrahtendes (5) und einer Hülse (12), sodass die Hülse (12) das Litzendrahtende (5) über zumindest einen Teil seines Längenbereichs zumindest abschnittsweise umgibt,
- Elektrisches Kontaktieren des Litzendrahtendes (5) mit der Hülse (12),
- Einführen des mit der Hülse (12) bestückten Litzendrahtendes (5) in die Ausnehmung (11) der Trägerplatte (2), **dadurch gekennzeichnet, dass** die Wicklung (1) eine Litzendrahtwicklung (1) ist und die Litzendrahtenden (5) Einzeldrähte (6) aufweisen und wobei nach dem Einführen des mit der Hülse (12) bestückten Litzendrahtendes (5) in die Ausnehmung (11) der Trägerplatte (2) die Litzendrahtenden (5) im Wesentlichen parallel zur Achse (7) der Wicklung (1) ausgerichtet bleiben und die Hülse (12) und die Trägerplatte (2) miteinander elektrisch kontaktiert werden

2. Verfahren nach Anspruch 1, **dadurch gekennzeichnet, dass** die Hülse (12) als geschlossene Hülse (12) ausgeführt ist und zum Zusammenführen der Hülse (12) und des Litzendrahtendes (5) die Hülse (12) über das Litzendrahtende (5) geschoben wird und das Litzendrahtende (5) über zumindest einen Teil seines Längenbereichs vollständig radial umschlossen wird.

3. Verfahren nach Anspruch 1, **dadurch gekennzeichnet, dass** die Hülse (12) beim Zusammenführen mit dem Litzendrahtende (5) als Hülsenrohling (22) ausgeführt ist, der durch Umformen in die Form einer Hülse (12) gebracht wird und so das Litzendrahtende (5) über zumindest einen Teil seines Längenbereichs vollständig radial umschließt.

4. Verfahren nach einem der Ansprüche 1 bis 3, **dadurch gekennzeichnet, dass** die Hülse (12) durch Crimpen und vorzugsweise durch Heißcrimpen mit den am Innenumfang anliegenden Einzeldrähten (6) des Litzendrahtendes (5) kontaktiert wird.

5. Verfahren nach Anspruch 4, **dadurch gekennzeichnet, dass** zum Heißcrimpen der von der Hülse (12) umschlossene Bereich des Litzendrahtendes (5) auf zumindest 200 °C und vorzugsweise auf zumindest 250 °C erwärmt wird, wodurch der Isolierlack der Einzeldrähte (6) des Litzendrahtendes (5) weggeschmolzen wird.

6. Verfahren nach einem der Ansprüche 1 bis 5, **dadurch gekennzeichnet, dass** die Hülse (12) eine erste Breite (13) und eine zweite Breite (14) aufweist, wobei die erste und die zweite Breite (13), (14) orthogonal zur Längsachse des Litzendrahtendes (5) ausgerichtet sind und wobei nach dem Kontaktieren der Hülse (12) mit dem Litzendrahtende (5) die erste Breite (13) der Hülse (12) eine zumindest um ein Zweifaches höhere und vorzugsweise zumindest um ein Vierfaches höhere räumliche Ausdehnung aufweist als die zweite Breite (14) der Hülse (12).

7. Verfahren nach einem der Ansprüche 1 bis 6, **dadurch gekennzeichnet, dass** zur Kontaktierung das Litzendrahtende (5) und die Hülse (12) so lange in ein Zinnbad getaucht werden, dass die Isolation des Litzendrahtendes (5) aufgeschmolzen wird.

8. Verfahren nach einem der Ansprüche 1 bis 7, **dadurch gekennzeichnet, dass** die Ausnehmung (11) der ersten Stirnseite (8) der Trägerplatte (2) eine Tiefe (15) aufweist, die sich von der ersten Stirnseite (8) aus orthogonal in Richtung der zweiten Stirnseite (9) erstreckt, und dass die Ausnehmung (11) eine erste Breite (16) und eine zweite Breite (17) aufweist, wobei die erste Breite (16) und die zweite Breite (17) in einem rechten Winkel zueinander ausgerichtet sind und wobei die Hülse (12) mit der Trägerplatte (2) derart kontaktiert wird, dass zumindest eine Breite (13), (14) der Hülse (12) mit zumindest einer Breite (16), (17) der Ausnehmung (11) der ersten Stirnseite (8) derart zusammenführbar ist, dass ein Spiel von zumindest 0,1 mm, vorzugsweise von zumindest 1 mm und weiter vorzugsweise von zumindest 2 mm besteht.

9. Verfahren nach einem der Ansprüche 1 bis 8, **dadurch gekennzeichnet, dass** die Ausnehmungen (11) an der ersten Stirnseite (8) der Trägerplatte (2) durchgehend zur zweiten Stirnseite (9) und zur Mantelfläche (10) hin offen ausgeführt sind, wobei die Trägerplatte (2) und die Litzendrahtwicklung (1) derart zueinander ausgerichtet werden, dass die Achse (7) der Litzendrahtwicklung (1) und die Längsachse (24) der Trägerplatte (2), welche orthogonal zur ersten Stirnseite (8) der Trägerplatte (2) verläuft, parallel zueinander verlaufen und wobei Trägerplatte (2) und Litzendrahtwicklung (1) in axialer Richtung (18) derart passend zueinander ausgerichtet werden, dass die Hülse (12) durch radiales Verschieben der Trägerplatte (2) oder durch radiales Verschieben der Litzendrahtwicklung (1) oder durch radiales Verschieben der Hülse (12) in die Ausnehmung (11) eingeführt wird.

10. Verfahren nach Anspruch 9, **dadurch gekennzeichnet, dass** die Ausnehmung (11) als Langloch (20) ausgeführt ist, die zur Mantelfläche (10) der Trägerplatte (2) hin geöffnet ist, wobei die Ausrichtung der Längsachse (25) des Langlochs (20) in radialer Richtung zum Kreismittelpunkt (21) der Stirnseite (8), (9) einen Winkel (23) aufweist, wobei dieser Winkel (23) 30°-60° und vorzugsweise 40°-50° beträgt und wobei die Hülse (12) in das Langloch (20) der Trägerplatte (2) durch radiales Verschieben eingeführt wird und die Verschiebung von einer zusätzlichen rotatorischen Bewegung um die Achse (7) der Litzendrahtwicklung (1) oder um den Mittelpunkt (21) der kreisförmigen Stirnseite (8), (9) überlagert wird.

11. Verfahren nach einem der Ansprüche 1 bis 10, **dadurch gekennzeichnet, dass** im Anschluss an das Einführen der Hülse (12) in die Ausnehmung (11) der Trägerplatte (2) die Hülse (12) zum Kontaktieren mit der Trägerplatte (2) verlötet wird.

12. Litzendrahtwicklung (1), hergestellt nach einem Verfahren gemäß einem der Ansprüche 1 bis 11.

13. Litzendrahtwicklung (1) nach Anspruch 12, **dadurch gekennzeichnet, dass** ein Litzendrahtende (5) zumindest fünf Einzeldrähte (6) und vorzugsweise zumindest fünfzehn Einzeldrähte (6) umfasst.

14. Litzendrahtwicklung (1) nach einem der Ansprüche 12 oder 13, **dadurch gekennzeichnet, dass** die Isolation der Litzendrahtenden (5) einen sterilisierbaren Lack umfasst.

15. Litzendrahtwicklung (1) nach einem der Ansprüche 12 bis 14, **dadurch gekennzeichnet, dass** die Litzendrahtenden (5) über einen Umfangsabschnitt von höchstens 180° und vorzugsweise über einen Umfangsabschnitt von höchstens 150° der Litzendrahtwicklung (1) angeordnet sind.
